**Europäisches Patentamt**

**European Patent Office**

**Office européen des brevets**

(19)

(11) **EP 1 513 281 A1**

(12) **EUROPEAN PATENT APPLICATION**

| | |
|---|---|
| (43) Date of publication:<br>**09.03.2005 Bulletin 2005/10** | (51) Int Cl.7: **H04L 1/00**, H04L 12/413,<br>H04L 1/20 |
| (21) Application number: **03292196.7** | |
| (22) Date of filing: **05.09.2003** | |

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Motorola Inc.**<br>**Schaumburg, IL 60196 (US)**<br><br>(72) Inventors:<br>• **Simoens, Sébastien**<br>**92330 Sceaux (FR)** | • **Gosteau, Jérémy**<br>**75014 Paris (FR)**<br><br>(74) Representative:<br>**Cross, Rupert Edward Blount et al**<br>**BOULT WADE TENNANT,**<br>**Verulam Gardens**<br>**70 Gray's Inn Road**<br>**London WC1X 8BT (GB)** |

(54) **A method and apparatus for link adaptation for packet transmission**

(57)    A method of link adaptation is provided, wherein a probability of packet collision is estimated. This estimate may subsequently be used to generate a substantially unbiased estimate of packet error rate, so improving the performance of the link adaptation method.

FIG. 2

## Description

Technical Field

The invention relates to a method and apparatus for link adaptation for packet transmission. In particular, it relates to a method and apparatus for link adaptation for packet transmission for varying and high traffic loads.

Background

In the wireless local area network (WLAN) market, the dominant medium access control (MAC) technique is CSMA/CA (carrier sense multiple access with collision avoidance); a random access protocol implemented in current IEEE 802.11 a/b/g products.

In the context of 802.11, CSMA/CA access is referred to as the distributed coordination function (DCF). An enhanced version of DCF (called Enhanced Distributed Channel Access or EDCA) is described in IEEE 802.11e that improves the MAC by introducing access priorities. However this enhanced version still relies on CSMA/CA, and it is anticipated that CSMA/CA will remain the dominant MAC protocol for a number of years.

In addition to medium access control, 802.11 WLAN systems typically also implement link adaptation techniques, which aim to select the highest possible bit rate given the current link quality.

Link adaptation methods for packet transmission enable a transmitter to select the physical bit rate that will maximise the link throughput under some quality of service (QoS) constraints. In order to take this decision, the link adaptation must therefore estimate the transmitter to receiver link quality. This link quality can be monitored either through some explicit feedback sent by the receiver (e.g. acknowledgement (ACKs) of successfully received packets), or by some implicit feedback; for example, an access point (AP) can infer the downlink quality from measurements performed on the uplink data packets it receives from a mobile terminal (MT), without requiring some explicit signalling.

Most link adaptation strategies proposed in the literature (for example, Simoens, S. and Bartolome, D.; "Optimum performance of link adaptation in HIPERLAN/ 2 networks", IEEE 53rd Vehicular Technology Conference, 6-9 May 2001 Volume 2, pp 1129 -1133,) ultimately rely on a prediction of the packet error rate (PER) of the link, which is then used to maximize the throughput under some QoS constraints. A few others take into account additional parameters such as the transmit power.

The PER can be estimated either directly, by counting the packet errors (unacknowledged packets), or indirectly by measuring channel metrics (e.g. signal to noise plus interference ratio (SNIP), channel delay spread, etc.,) and then assuming that the PER is a function of these metrics (e.g. by using PER vs. SNR curves).

It would be useful if one could base link adaptation on channel dependent metrics such as SNIR or delay spread, because they are available instantly (it is not necessary to count several packet errors to get an estimate of the PER) and they are not altered by traffic load. However, it is not always possible to provide for explicit signalling of SNIP or Channel delay spread by the transmitter. For example, the IEEE802.11 standards do not provide for this.

As noted previously, one solution would be to use some implicit feedback, but such a solution is limited by the fact that the uplink and downlink are not symmetrical: the MT and AP transmit powers are different, the radio frequency parts involved are not the same, and the interference at the AP and at the MT can differ significantly.

It would appear that in fact the simplest solution in 802.11 is to perform a link adaptation based on acknowledgements (ACKs). In 802.11, an ACK is sent after each successfully decoded packet, and so the PER can theoretically be estimated from the ratio of unacknowledged packets to the total number of sent packets.

Several methods exploiting ACKs have been proposed. Some methods consist of comparing the estimated PER to a threshold. If the PER is above the threshold then a lower bit rate (more robust) mode is selected for the next transmission. If the PER is below a given threshold, then a higher bit rate (less robust) is selected. In A.J. van der Vegt, "Auto Rate Fallback Algorithm for the IEEE 802.11a Standard", available at http://www.phys.uu.nl/~vdvegt/docs/gron/, the authors use a variant of ACK-based link adaptation by counting the number of successive ACKs, and the number of successive missed ACKs.

However, a problem with ACK based link adaptation is that poor link quality is not the only possible cause of missed ACKs, resulting in a biased estimate of the link quality that overestimates the contribution of link quality to missed ACKs, and consequently a reduction in the effectiveness of the link adaptation.

The purpose of the present invention is to address the above problem.

Summary of the Invention

The present invention provides a method of reducing packet error rate estimation bias in link adaptation for packet transmission, characterised by the step of estimating a probability of packet collision.

In a first aspect, the present invention provides a method of link adaptation, as claimed in claim 1.

In a second aspect, the present invention provides an apparatus for link adaptation, as claimed in claim 9.

Further features of the present invention are as defined in the dependent claims.

Embodiments of the present invention will now be described by way of example with reference to the accompanying drawings, in which:

Brief description of the drawings

FIG. 1 is a graph showing data throughput on the y-axis versus traffic load on the x-axis for several link adaptation methods in the prior art.

FIG. 2 is a block diagram illustrating the operation of a distributed coordination function.

FIG. 3 is a graph showing data throughput on the y-axis versus traffic load on the x-axis for several link adaptation methods in the prior art and an embodiment of the present invention.

Detailed description

A method of link adaptation is disclosed. In the following description, a number of specific details are presented in order to provide a thorough understanding of the present invention. It will be obvious, however, to a person skilled in the art that these specific details need not be employed to practice the present invention. In other instances, well known methods, procedures and components have not been described in detail in order to avoid unnecessarily obscuring the present invention.

In fact, when implementing link adaptation methods, a major problem with carrier sense multiple access with collision avoidance (CSMA/CA) is that packet collisions frequently occur as cell load increases. These collisions can affect a link adaptation method, leading to a significant decrease in throughput.

This phenomenon appears particularly in the case of link adaptation methods in a mixed traffic environment (voice over internet protocol (VoIP) and file transfers). The problem thus identified is to find a means to make the link adaptation method substantially compensate for packet collisions due to traffic load, and so maintain a level of performance.

This problem manifests itself in contention-based methods such as the ACK based methods discussed previously, since in random access networks a missed ACK can come from either thermal noise (e.g. link quality) or packet collision. Therefore, when the traffic load (cell load) increases and packet collisions become frequent, the measured PER also increases and ACK-based link adaptation methods typically fall back to a lower bit rate.

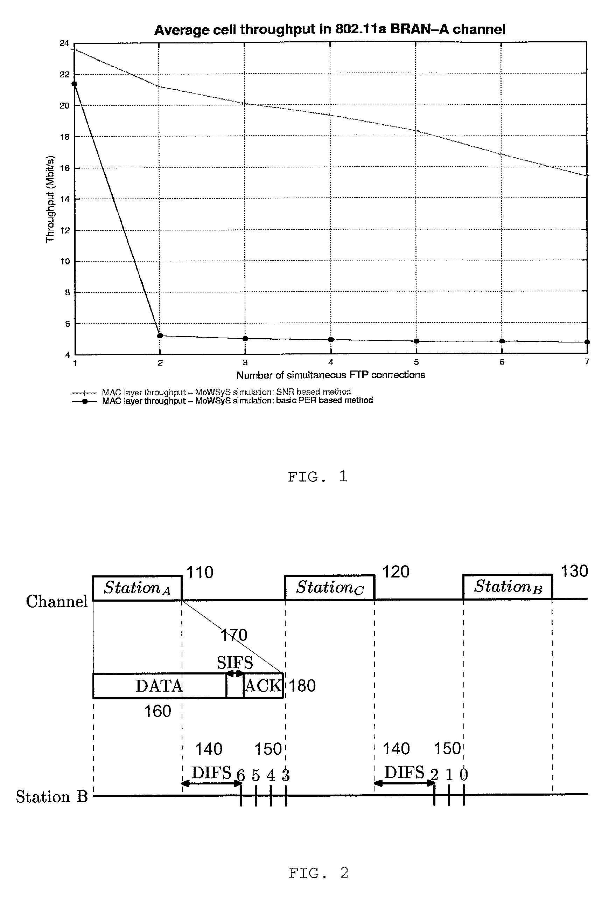

This is clearly an undesirable response. Falling back to a lower bit rate increases the medium occupancy, which makes the transmission more robust to noise whilst in fact the packet collisions are the real problem. However, the result of increase medium occupancy is typically to increase packet collisions, so exacerbating the original problem. The overall result is a drop in throughput due to a rapid reduction in bit rate, as seen in FIG. 1:

In the graph of FIG. 1, the number of large file transfers occurring simultaneously in an IEEE802.11a cell is increased along the x-axis from 1 to 7. With an SNR based link adaptation ('+' curve), the average cell throughput on the y-axis decreases slowly from 24 Mbit/s to 16 Mbit/s as the load increases. But with a basic ACK-based algorithm exhibiting the problems discussed above ('•' curve, based on average PER estimation and threshold comparison), the throughput drops very quickly.

Packet collisions occur due to the nature of the 802.11 CSMA/CA access, referred to as the distributed coordination function (DCF).

Referring to FIG. 2, DCF operates as follows:

A station B 130 waiting to transmit must first contend to get access to the medium. This consists of generating a random number between 0 and its contention window (CW). This number is called the back-off counter 150. Then station B 130 senses the channel. If the channel is free for a longer time than the distributed inter frame space (DIPS) 140, it starts decreasing the back-off counter 150 every time slot. The decrease of the back-off counter 150 can be interrupted by a transmission by another station A 110, which can be followed by a short inter frame space (SIFS) 170 and an acknowledgement 180 if the packet 160 was successfully decoded (for clarity features 160, 170 and 180 are shown magnified in FIG. 2). The SIFS 170 is shorter than the DIFS 140, so that the other stations will let the acknowledgement 180 be transmitted without contention. After the acknowledgement 180, if the channel remains free longer than a DIFS 140, the station B resumes the decrease of the back-off counter 150. Finally, when the latter reaches zero, station B 130 transmits. If the back-off counter 150 of two stations reach zero at the same time, however, the resulting collision can corrupt both packets.

In an embodiment of the present invention, in operation a station waiting to transmit will implement a method to estimate the probability that another device starts transmitting in the same time slot, i.e. a probability of packet collision.

By estimating a probability of packet collision, a substantially unbiased estimate of PER can be produced by factoring for that proportion of failed packets that are due to packet collision rather than other aspects of link quality.

The probability of packet collision can be estimated by calculating substantially the following equation part;

$$\hat{P}_C = \frac{N_{Busy}}{N_{Total}} \qquad \text{Eq. 1}$$

where $N_{Busy}$ is the number of transmission slots in an observation period that are occupied, and $N_{Total}$ is the total number of slots in the observation period.

The observation period varies depending upon the application and channel load. Typical durations observed in simulations are one second for data transmissions, and 5 seconds for VoIP. The method envisages that over this observation period an ongoing refinement of $P_C$ may take place. Subsequent additional observations are also envisaged, in particular if traffic loads vary considerably.

In an embodiment of the present invention, observation is substantially continuous. In such a case the observation period used in Eq. 1 will be a recent period.

Transmission slots are defined in Bianchi, G., "Performance analysis of the IEEE 802.11 distributed coordination function", IEEE Journal on Selected Areas in Communications, Volume 18 No. 3, March 2000 pp 535-547, as any one of the following;

    i. an empty slot;
    ii. a successful transmission (i.e. a packet, followed by a short inter-frame space (IFS), an acknowledgement (ACK) and a distributed IFS; and
    iii. a failed transmission (i.e. a packet followed by a point coordination function IFS).

In an alternative embodiment of the present invention, an estimation of packet collision probability comprises calculating the average number of empty slots between the end of a distributed inter-frame space and the start of a transmission, during an observation period. The probability is then substantially the inverse of that average.

In a first alternative embodiment of the present invention, the average is calculated using the existing back-off counter 150. However, this assumes that the back-off counter is in use often enough to produce a sufficiently accurate average within the observation period.

In a second alternative embodiment of the present invention, the average is calculated using a dedicated counter.

In calculating the packet error rate, current ACK-based link adaptation methods assume that the observed probability of packet failure corresponds to the packet error rate (PER) due to line quality, that is:

$$P_{fail} = PER \qquad \text{Eq. 2}$$

whereas in actuality the relationship is

$$P_{fail} = P_C + (1 - P_C)PER \qquad \text{Eq. 3}$$

Comparing Eq. 2 and Eq. 3 shows that when packet collisions occur, Eq. 2 overestimates the PER. As noted previously, this estimation bias reduces the effectiveness of current ACK based methods due to unnecessary reductions in bit rate.

In an embodiment of the present invention, a substantially unbiased PER is estimated by calculating substantially the following equation part;

$$P\hat{E}R = \frac{\hat{P}_{fail} - \hat{P}_C}{1 - P_C} \qquad \text{Eq. 4}$$

where $\hat{P}_{fail}$ is the packet failure rate in an observation period, $P_C$ is the estimate of packet collision probability and $P\hat{E}R$ is the resulting estimate.

In an embodiment of the present invention, a simple method of using the $P\hat{E}R$ in a link adaptation method is as an input to the regulation of the bit transmission rate, by

    i. including a factor to the link adaptation calculation intended to lower the bit transmission rate if $P\hat{E}R > X$; and
    ii. including a factor to the link adaptation calculation intended to raise the bit transmission rate if $P\hat{E}R < Y$,

where X and Y are threshold values.

It will be clear to a person skilled in the art that $P\hat{E}R$ can be used as an input to the regulation of the bit transmission rate in conjunction with other factors, such as any alternative link quality estimate, or quality of service constraints, in the regulation of a link adaptation method.

It will also be clear to a person skilled in the art that embodiments of the present invention can also be applied to other link adaptation methods that combine $P_C$ with other metrics than $P_{fail}$. For example, the number of successive failures can be used instead of the failure probability in generating $P\hat{E}R$.

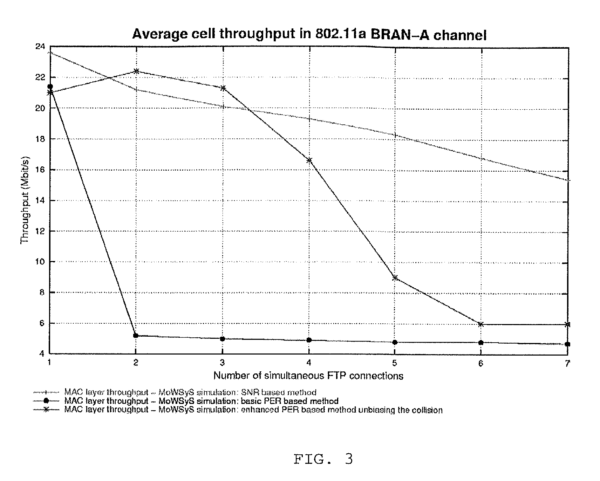

The performance improvement brought by an embodiment of the present invention is illustrated by the '*' curve of FIG. 3. Here, with the unbiased PER estimator $P\hat{E}R$ of Eq. 4 used in the simulation, now up to 4 users can simultaneously download large files without the cell throughput collapsing.

Apparatus operable to perform link adaptation is also provided, comprising estimation means for estimating a probability of packet collision as described herein.

In an embodiment of the present invention, a mobile terminal comprises the apparatus.

In another embodiment of the present invention, a WLAN access point comprises the apparatus.

## Claims

1. A method of link adaptation for packet transmission with reduced packet error rate estimation bias, comprising the step of;

   regulating a bit transmission rate, the regulation of the bit transmission rate being **characterised by** the step of;
   estimating a probability of packet collision.

2. A method according to claim 1, wherein the step of estimating a probability of packet collision comprises calculating substantially the following equation part;

$$\hat{P}_C = \frac{N_{Busy}}{N_{Total}}$$

   where $N_{Busy}$ is the number of transmission slots in an observation period that are occupied, and $N_{Total}$ is the total number of slots in the observation period.

3. A method according to claim 2, wherein a transmission slot may be any one of the following set;

   i. an empty slot;
   ii. a successful transmission (i.e. a packet, followed by a short inter-frame space (IFS), an acknowledgement (ACK) and a distributed IFS; or
   iii. a failed transmission (i.e. a packet followed by a point IFS).

4. A method according to any one of the preceding claims, wherein the step of estimating a probability of packet collision comprises calculating the average number of empty slots between the end of a distributed inter-frame space and the start of a transmission, in an observation period.

5. A method of packet transmission including link adaptation by a method as claimed in any preceding claim, said link adaptation comprising a step of regulating a bit transmission rate, and the regulation of the bit transmission rate includes a factor tending to reduce said bit transmission rate if the estimated packet error rate is less than a threshold value and tending to increase said bit transmission rate if the estimated packet error rate is greater than said threshold value.

6. A method according to any one of the preceding claims, wherein a packet error rate estimate $P\hat{E}R$ is estimated by calculating substantially the following

equation part;

$$P\hat{E}R = \frac{\hat{P}_{fail} - \hat{P}_C}{1 - P_C}$$

   where $\hat{P}_{fail}$ is the packet failure rate in an observation period and $P_C$ is an estimate of packet collision probability.

7. A method according to claim 6, wherein the estimate $P\hat{E}R$ is used by a link adaptation method as an input to the regulation of the bit transmission rate.

8. A method according to any one of claims 6 and 7 wherein the estimate $P\hat{E}R$ is used by a link adaptation method as an input to the regulation of the bit transmission rate, by

   i. including a factor to the link adaptation calculation intended to lower the bit transmission rate if $P\hat{E}R > X$; and
   ii. including a factor to the link adaptation calculation intended to raise the bit transmission rate if $P\hat{E}R < Y$,

   where X and Y are threshold values.

9. Apparatus for link adaptation for packet transmission according to a method as claimed in any one of the preceding claims, and comprising;
   estimation means for estimating a probability of packet collision.

10. Apparatus according to claim 9, wherein the estimation means comprises calculating means for calculating substantially the following equation part;

$$\hat{P}_C = \frac{N_{Busy}}{N_{Total}}$$

   where $N_{Busy}$ is the number of transmission slots in an observation period that are occupied, and $N_{Total}$ is the total number of slots in the observation period.

11. Apparatus according to any one of claims 9 and 10 wherein the estimation means is operable to estimate a packet error rate by calculating substantially the following equation part;

$$P\hat{E}R = \frac{\hat{P}_{fail} - P_C}{1 - P_C}$$

   where $\hat{P}_{fail}$ is the packet failure rate in an observation period and $P_C$ is an estimate of packet collision probability.

**12.** A transmitter comprising apparatus according to any of claims 9 to 11.

**Average cell throughput in 802.11a BRAN–A channel**

FIG. 1

FIG. 2

**Average cell throughput in 802.11a BRAN–A channel**

FIG. 3

**European Patent Office**

**EUROPEAN SEARCH REPORT**

Application Number

EP 03 29 2196

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 2002/105925 A1 (SHOEMAKE MATTHEW B) 8 August 2002 (2002-08-08)<br>* the whole document * | 1,2,5,9, 10,12<br><br>3,4,6-8, 11 | H04L1/00<br>H04L12/413<br>H04L1/20 |
| X | US 6 252 881 B1 (SAMOYLENKO STANISLAV IVANOVICH) 26 June 2001 (2001-06-26)<br>* column 2, line 57 - column 3, line 14 *<br>* column 25, line 29 - line 47 * | 1-4,9,10 | |
| Y | KIHONG KIM ET AL: "Interference mitigation in asynchronous slow frequency hopping Bluetooth networks"<br>5TH INTERNATIONAL SYMPOSIUM ON WIRELESS PERSONAL MULTIMEDIA COMMUNICATIONS. PROCEEDINGS (CAT. NO.02EX568), 5TH INTERNATIONAL SYMPOSIUM ON WIRELESS PERSONAL MULTIMEDIA COMMUNICATIONS, HONOLULU, HI, USA, 27-30 OCT. 2002,<br>pages 198-202 vol.1, XP002271776<br>2002, Piscataway, NJ, USA, IEEE, USA<br>ISBN: 0-7803-7442-8<br>* the whole document * | 6-8,11 | TECHNICAL FIELDS SEARCHED (Int.Cl.7)<br><br>H04L |
| D,Y | BIANCHI G: "PERFORMANCE ANALYSIS OF THE IEEE 802.11 DISTRIBUTED COORDINATION FUNCTION"<br>IEEE JOURNAL ON SELECTED AREAS IN COMMUNICATIONS, IEEE INC. NEW YORK, US,<br>vol. 18, no. 3, March 2000 (2000-03),<br>pages 535-547, XP000947377<br>ISSN: 0733-8716<br>* the whole document * | 3,4 | |

The present search report has been drawn up for all claims

| Place of search | Date of completion of the search | Examiner |
|---|---|---|
| THE HAGUE | 27 February 2004 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 29 2196

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2004

| Patent document cited in search report | | Publication date | Patent family member(s) | | Publication date |
|---|---|---|---|---|---|
| US 2002105925 | A1 | 08-08-2002 | NONE | | |
| US 6252881 | B1 | 26-06-2001 | AU | 1343301 A | 14-05-2001 |
| | | | WO | 0133755 A1 | 10-05-2001 |

EPO FORM P0459